# EUROPEAN PATENT SPECIFICATION

(11) **EP 2 912 297 B1**
(45) Date of publication and mention of the grant of the patent: **22.03.2017**
(21) Application number: 12783525.4
(22) Date of filing: 29.10.2012
(51) Int. Cl.: F02M 35/10, F02D 13/02, F02M 21/04, F02M 35/104

(54) **INTAKE ASSEMBLY FOR AN INTERNAL COMBUSTION ENGINE AND INTERNAL COMBUSTION ENGINE WITH THE SAME**
EINLASSANORDNUNG FÜR EINEN VERBRENNUNGSMOTOR UND DAMIT AUSGESTATTETER VERBRENNUNGSMOTOR
ENSEMBLE D'ADMISSION POUR UN MOTEUR À COMBUSTION INTERNE ET MOTEUR À COMBUSTION INTERNE MUNI DE CELUI-CI

(43) Date of publication of application: 02.09.2015
(73) Proprietor: Caterpillar Energy Solutions GmbH, 68167 Mannheim (DE)
(72) Inventor: REITZ, Dieter, 64367 Mühltal (DE); DREXEL, Christian, 67245 Lambsheim (DE)
(74) Representative: Kramer Barske Schmidtchen Patentanwälte PartG mbB
(86) International application number: PCT/EP2012/004523
(87) International publication number: WO 2014/067538

(56) References cited:
- DE-A1- 19 940 617
- DE-B4- 4 447 832
- DE-U1-202010 003 720
- FR-A1- 2 879 660
- JP-A- H08 144 868
- US-A1- 2003 010 310
- US-A1- 2008 072 862
- US-A1- 2009 071 431
- US-A1- 2011 000 454
- US-B1- 6 318 326

## Description

### Technical Field

The present disclosure generally relates to an internal combustion engine comprising a plurality of cylinders and an intake assembly for supplying intake air or a mixture of intake air and fuel to the plurality of cylinders.

### Background

Internal combustion engines generally may comprise an intake manifold for directing a flow of a gaseous fluid, for example, intake air or a mixture of intake air and fuel, to cylinders of the internal combustion engine. The intake air or the mixture of intake air and fuel may be supplied to combustion chambers formed in the cylinders via intake ports associated with each of the cylinders. An inlet valve may be disposed in each intake port and may be actuated to open and close with a predetermined timing during a combustion cycle of the cylinder.

In an effort to increase engine efficiency, different inlet valve timings may be used. For example, the inlet valves may be actuated with an Atkinson valve timing. According to this timing, the intake valve is held open longer than normal to allow a backflow of intake air or a mixture of intake air and fuel from the combustion chamber into the intake port, thereby reducing the effective compression ratio.

FR 2 879 660 A1 discloses a flame arrester arrangement for an internal combustion engine. The arrangement has a combustion chamber connected to intake and exhaust ducts that open towards the exterior by respective intake and exhaust ports. Flame arresters are arranged at outlets of the respective ports so that flames exit from the chamber via the ports and extinguish before spreading outside a cylinder head. The gas flow areas of the arresters are greater than that of the ports.

US 2009/0071431 A1 discloses an intake manifold for supplying intake air to an internal combustion engine including a surge tank for temporarily storing the intake air. A guide wall is provided in the surge tank and configured to change a flow direction of the intake air introduced in the surge tank to direct the intake air towards specific ones of inlets of branch intake passages.

DE 44 47 832 B4 relates to an air inlet system for an internal combustion engine comprising an air entry section and a suction pipe assembly. At least two air flow chambers connect the air entry to the suction pipes, which are located adjacent to each other. The air flow chambers are separated by a common wall and connected by a hole in this wall. One of the chambers has a longitudinal wall which separates at least one of the chambers into two longitudinal sections.

The present disclosure is directed, at least in part, to improving or overcoming one or more aspects of prior systems.

### Summary of the Disclosure

According to one aspect of the present disclosure, an intake assembly for an internal combustion engine having a plurality of cylinders comprises an intake manifold configured to supply a gaseous fluid to the plurality of cylinders, and a collecting chamber. The collecting chamber is fluidly connected to the intake manifold and adapted to be fluidly connected to an intake port of one of the plurality of cylinders. The collecting chamber is configured to limit a backflow of the gaseous fluid from the intake port into the intake manifold.

According to another aspect of the present disclosure, an internal combustion engine comprises a plurality of cylinders and an intake manifold configured to supply a gaseous fluid to the plurality of cylinders. The internal combustion engine further comprises a collecting chamber fluidly connected to the intake manifold and to an intake port of one of the plurality of cylinders. The collecting chamber is configured to limit a backflow of the gaseous fluid from the intake port into the intake manifold.

Other features and aspects of the present disclosure will be apparent from the following description and the accompanying drawings.

### Brief Description of the Drawings

Fig. 1 is a schematic view of an exemplary internal combustion engine according to the present disclosure;
Fig. 2 is a schematic cross-sectional view of an intake manifold fluidly connected to a cylinder of an internal combustion engine according to an exemplary embodiment of the present disclosure;
Fig. 3 is a schematic cross-sectional view of an intake manifold fluidly connected to a cylinder of an internal combustion engine according to another exemplary embodiment of the present disclosure;
Fig. 4 is a schematic cross-sectional view of an intake manifold fluidly connected to a cylinder of an internal combustion engine according to a further exemplary embodiment of the present disclosure;
Fig. 5 is a schematic cross-sectional view of an intake manifold fluidly connected to a cylinder of an internal combustion engine according to an embodiment of the present invention;
Fig. 6 is a schematic cross-sectional view of an intake manifold fluidly connected to a cylinder of an internal combustion engine according to an embodiment of the present invention;
Fig. 7 is a partial perspective sectional view of an intake manifold housing according to an embodiment of the present invention; and
Fig. 8 is another partial perspective sectional view of the intake manifold housing of Fig. 7.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that operating an internal combustion engine with an Atkinson valve timing for the inlet valves of the engine may not be sufficient to maximize the efficiency of the internal combustion engine. Using an Atkinson valve timing for the inlet valves of the combustion engine may result in a backflow of charged intake air or a charged mixture of intake air and fuel into the intake port of each cylinder and into the intake manifold. Herein, the term "gaseous fluid" may be used for both intake air and a mixture of intake air and fuel. As the temperature of the discharged air or mixture of air and fuel is increased due to the compression, the temperature of the intake air or the mixture in the intake manifold also increases. When the intake manifold supplies the air or the mixture of fuel and air to a plurality of cylinders, the temperature increases in a flow direction inside the intake manifold. Therefore, the temperature of the air or the mixture of fuel and air supplied to the cylinders disposed downstream in the flow direction increases, and the density decreases. This leads to a reduced performance of the downstream cylinders.

In addition, the increased temperature of the air or mixture results in a decreased knock rating of the cylinders. In order to avoid excessive knocking, a compression ratio of the cylinders has to be reduced, further decreasing the performance of the engine.

Accordingly, the present application may be based in part on the realization that avoiding a backflow of air or a mixture of air and fuel into the intake manifold may prevent the temperature in the intake manifold from increasing. Thus, the performance of the downstream cylinders may be improved. This may result in an improved overall performance of the combustion engine.

The present disclosure may further be based in part on the realization that providing at least one separate collecting chamber between the intake manifold and of the plurality of cylinders may result in the backflow from a cylinder being confined to the corresponding collecting chamber and, therefore, not entering the intake manifold. The at least one collecting chamber may be fluidly connected to the manifold via an inlet and to an intake port of a corresponding cylinder via an outlet. The inlet and the outlet may be appropriately sized and arranged to prevent or at least limit the discharged mixture of fuel and air from entering the manifold.

The present disclosure may further be based in part on the realization that the separate collecting chamber having a volume that is at least 10% of an intake volume of each cylinder, for example, between 10% and 500%, between 20% and 500%, between 30% and 500%, between 40% and 500%, between 50% and 500%, between 100% and 500%, or between 200% and 500% of an intake volume of each cylinder, may assure that no discharged mixture of fuel and air enters the intake manifold. Further, the collecting chamber may have a cross-section that is significantly larger than a cross-section of the inlet connecting the collecting chamber to the intake manifold. Thus, an important separation of the volume of the intake manifold from the volume of the collecting chamber may be achieved.

The present disclosure may further be based in part on the realization that providing a flow director in the at least one collecting chamber may result in the discharge of the charged air or mixture of air and fuel from the cylinder being forced to occupy substantially all of the volume of the collecting chamber. Therefore, the possibility that some of the discharged air or mixture enters the intake manifold may be reduced.

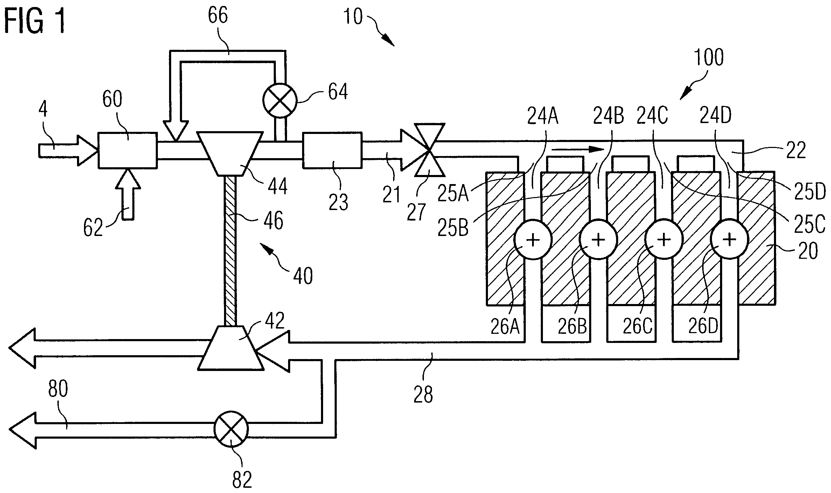

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. For the purposes of the present disclosure, internal combustion engine 10 is a gaseous fuel internal combustion engine. One skilled in the art will recognize, however, that gaseous fuel internal combustion engine 10 may be any type of engine (turbine, gas, diesel, natural gas, propane, dual fuel, etc.) that utilizes a mixture of fuel and air for combustion. Further, in some types of combustion engines, the mixture of fuel and air may be supplied to the combustion engine via an intake manifold. In other types of combustion engines, only intake air may be supplied to the combustion engine via the intake manifold, and fuel may be separately injected into each cylinder prior to combustion.

Gaseous fuel internal combustion engine 10 may be of any size, with any number of cylinders and in any configuration ("V", "in-line", etc.). Gaseous fuel internal combustion engine 10 may be used to power any machine or other device, including locomotive applications, on-highway trucks or vehicles, off-highway machines, earth-moving equipment, generators, aerospace applications, marine applications, pumps, stationary equipment such as power plants, or other engine-powered applications.

Still referring to Fig. 1, gaseous fuel internal combustion engine 10 comprises an engine block 20 including a bank of cylinders 26A-26D, at least one fuel tank (not shown), a turbocharger 40 associated with cylinders 26A-26D, and an intake assembly 100.

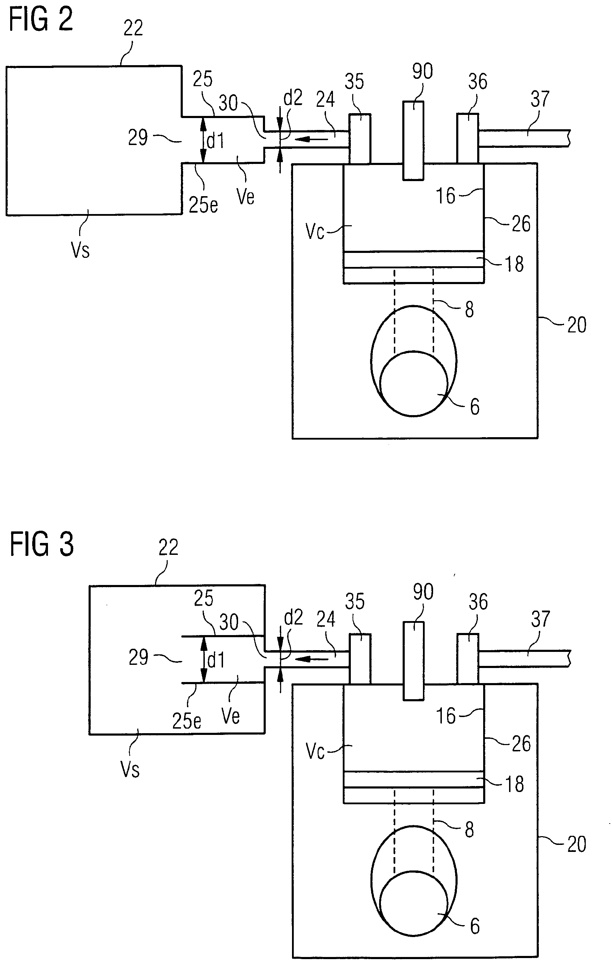

Engine block 20 includes a crank-case (not shown) within which a crank-shaft 6 (see Figs. 2-6) is supported. Crank-shaft 6 is connected to pistons 18 (see Figs. 2-6) that are movable within each of cylinders 26A-26D during operation of gaseous fuel internal combustion engine 10.

Intake assembly 100 comprises an intake manifold 22, a plurality of collecting chambers 25A-25D, and a plurality of intake ports 24A-24D.

Intake manifold 22 defines a flow direction of a mixture of fuel and air in intake manifold 22 (shown by the arrow in Fig. 1) and is fluidly connected to each of cylinders 26A-26D via a corresponding one of inlet ports 24A-24D of cylinders 26A-26D. Inlet ports 24A-24D are configured to receive the mixture of fuel and air from intake manifold 22. Generally, inlet ports 24A-24D may be formed at least in part in respective cylinder heads or in a common cylinder head (not shown) of cylinders 26A-26D. Each of cylinders 26A-26D is provided with at least one inlet valve 35 (see Figs. 2-6) that is adapted to open or close a fluid connection between one of intake ports 24A-24D and a corresponding combustion chamber 16 of cylinders 26A-26D.

Collecting chambers 25A-25D are disposed upstream of intake ports 24A-24D. Each of the plurality of collecting chambers 25A-25D is separated from adjacent collecting chambers 25A-25D and fluidly connected to intake manifold 22 and one of intake ports 24A-24D of cylinders 26A-26D to receive the mixture of fuel and air from intake manifold 22 and supply the same to the corresponding one of intake ports 24A-24D.

An exhaust manifold 28 is connected to each of cylinders 26A-26D. Each of cylinders 26A-26D is provided with at least one exhaust valve 36 (see Figs. 2-6) configured to open and close a fluid connection between the combustion chamber of the corresponding cylinder and exhaust manifold 28.

Generally, when gaseous fuel internal combustion engine 10 is operated, the mixture of gaseous fuel and air (in the following referred to as the "mixture") is introduced into the combustion chambers of the plurality of cylinders 26A-26D via intake manifold 22, the plurality of collecting chambers 25A-25D and the plurality of intake ports 24A-24D. After combustion, exhaust gases generated by the combustion process are released from cylinders 26A-26D through exhaust manifold 28.

Turbocharger 40 is configured to use the heat and pressure of the exhaust gas of gaseous fuel internal combustion engine 10 to drive a compressor 44 for compressing the mixture prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

In order to generate the mixture, a gas mixer 60 is configured to suck in air through a main air inlet 4 and gaseous fuel through a fuel inlet 62. Within gas mixer 60, the air mixes with the gaseous fuel, and the resulting mixture is supplied to compressor 44.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the mixture from compressor connection 21 into intake manifold 22.

During operation of gaseous fuel internal combustion engine 10, the mixture of gaseous fuel and air is compressed and cooled before being supplied to cylinders 26A-26D. Within cylinders 26A-26D, further compression and heating of the mixture may be caused by movement of pistons 18 (see Figs. 2-6). Then, a spark plug 90 (see Figs. 2-6) generates a spark for igniting the mixture within the cylinders 26A-26D. The produced exhaust gas is discharged via exhaust manifold 28.

An outlet of exhaust manifold 28 is fluidly connected to an inlet of turbine 42. An outlet of turbine 42 may be fluidly connected to, for example, an exhaust gas treatment system (not shown).

In some exemplary embodiments, as indicated in Fig. 1, gaseous fuel internal combustion engine 10 may be provided with a waste gate system including a waste gate connection 80 and a waste gate valve 82. Additionally, gaseous fuel internal combustion engine 10 may include a blow-off system including a blow-off connection 66 and a blow-off valve 64.

Turning now to Fig. 2, an exemplary embodiment of an internal combustion engine according to the present disclosure is illustrated in more detail. The person skilled in the art will recognize that the exemplary cylinder 26, the exemplary intake port 24 and the exemplary collecting chamber 25 shown in Fig. 2 may demonstrate the principles of the cylinders 26A-26D, the intake ports 24A-24D, and the collecting chambers 25A-25D of Fig. 1, respectively. Therefore, the exemplary disclosed construction shown in Fig. 2 also applies to the cylinders 26A-26D and the corresponding intake ports 24A-24D and collecting chambers 25A-25D shown in Fig. 1.

Fig. 2 shows a schematic cross-sectional view perpendicular to the flow direction of the mixture in intake manifold 22. Generally, cylinder 26 defines a combustion chamber 16 having an intake volume Vc and includes piston 18. In some embodiments, intake volume Vc may have a volume of, for example, 21, 41, 17 1, or even significantly larger volumes, depending on the application. Crank-shaft 6 is connected to piston 18 via a piston rod 8. Piston 18 is configured to reciprocate within cylinder 26.

Cylinder 26 is fluidly connected to collecting chamber 25 via intake port 24. Intake port 24 may have a flow cross-sectional area (in the following simply referred to as "cross-section") d2. It should be noted that intake port 24 may have a cross-section that is not constant. Therefore, as used herein, the term "cross-section" may generally be used to denote the maximum flow cross-sectional area of a component.

Intake valve 35 may be disposed in intake port 24. Further, cylinder 26 may be fluidly connected to exhaust manifold 28 via an exhaust gas passage 37. Exhaust valve 36 may be disposed in exhaust gas passage 37.

Intake manifold 22 defines an intake manifold volume Vs. Collecting chamber 25 is disposed between intake manifold 22 and intake port 24. Collecting chamber 25 may include an inlet 29 fluidly connecting collecting chamber 25 to intake manifold 22, and an outlet 30 fluidly connecting collecting chamber 25 to intake port 24. Collecting chamber 25 may define a collecting chamber volume Ve. In the exemplary embodiment shown in Fig. 2, collecting chamber 25 is disposed adjacent to intake manifold 22. Collecting chamber 25 has a cross-section d1 and extends with a substantially constant cross-section in a portion 25e extending from inlet 29 to outlet 30. Collecting chamber 25 is configured to define a collecting chamber volume Ve that has a volume of between 50% and 100% of intake volume Vc of cylinder 26, depending at least in part on the Atkinson timing used for inlet valve 35. In other exemplary embodiments, collecting chamber volume Ve may have a volume that is at least 10% of intake volume Vc of cylinder 26, for example, between 10% and 500%, between 20% and 500%, between 30% and 500%, between 40% and 500%, between 50% and 500%, between 100% and 500%, or between 200% and 500% of intake volume Vc of cylinder 26.

In the embodiment shown in Fig. 2, collecting chamber 25 is formed by a housing that is connected to a housing of intake manifold 22 on one side and intake port 24 (more precisely, the portion of the cylinder head defining intake port 24) on the opposite side. In some embodiments, the housing of collecting chamber 25 may, for example, be formed as a pipe-like member and may have a cylindrical cross-section. It should be noted that in other exemplary embodiments the housing may not be cylindrical, and may have an arbitrary cross-section, for example, a rectangular cross-section. Further, it should be appreciated that the housing of collecting chamber 25 may either be integrally formed with the housing of intake manifold 22, or may be a separate housing attached to the housing of intake manifold 22 in a known manner, for example, by one or more flanges formed on one or both of the respective housings. This also applies to other exemplary embodiments described herein.

In the embodiment shown in Fig. 2, cross-section d1 of collecting chamber 25 may be 50% to 2500% of cross-section d2 of intake port 24. In other exemplary embodiments, some of which will be described below, cross-section d1 of collecting chamber 25 may be even larger than 2500% of cross-section d2 of intake port 24. While both collecting chamber 25 and intake port 24 are shown in Fig. 2 as extending along a straight line, it should be appreciated that intake port 24 and/or collecting chamber 25 may also have a curved or step-like configuration. Further, while collecting chamber 25 and intake port 24 are shown in Fig. 2 as having a constant cross-section, it should be appreciated that in other embodiments cross-sections d1 and d2 may vary along the length of collecting chamber 25 and/or intake port 24.

During operation of gaseous fuel internal combustion engine 10, when, for example, an Atkinson timing is used for inlet valve 35, a discharge of the mixture of fuel and air from combustion chamber 16 may enter intake port 24 during a compression stroke of cylinder 26 (as shown by the arrow in Fig. 2). The discharge of the mixture of fuel and air may enter collecting chamber 25 through outlet 30. However, due to the collecting chamber volume Ve having a volume of between 50% and 100% of an intake volume Vc of cylinder 26, no discharged mixture of fuel and air may enter intake manifold 22. Accordingly, the temperature of the mixture of fuel and air flowing in the flow direction inside intake manifold 22 (in Fig. 2, perpendicular to the drawing sheet) is not affected by the discharged mixture. It should be noted that the term "intake volume" as used herein denotes the volume defined by the inner surface of combustion chamber 16, the upper surface of piston 18 when piston 18 reaches the BDC position during an intake stroke of cylinder 26, and the bottom surface of the cylinder head (not shown).

Now referring to Fig. 3, another exemplary embodiment of the present disclosure is shown. The embodiment shown in Fig. 3 is similar to the embodiment shown in Fig. 2, and like elements are denoted by like reference numerals.

In the embodiment shown in Fig. 3, collecting chamber 25 is disposed within intake manifold volume Vs of intake manifold 22. It should be appreciated that, in other exemplary embodiments, collecting chamber 25 may be partially disposed within intake manifold volume Vs.

In some exemplary embodiments, collecting chamber 25 may be defined by a cylindrical wall extending from an inner wall surface of the housing of intake manifold 22 and surrounding outlet 30 of collecting chamber 25. Collecting chamber 25 may again define a collecting chamber volume Ve that has a volume that is at least 10% of intake volume Vc of cylinder 26, for example, between 50% and 100% of intake volume Vc of cylinder 26. Further, cross-section d1 of collecting chamber 25 may again be between 50% and 2500% of cross-section d2 of intake port 24. With the construction shown in Fig. 3, the same effects as those described with respect to the embodiment shown in Fig. 2 can be achieved.

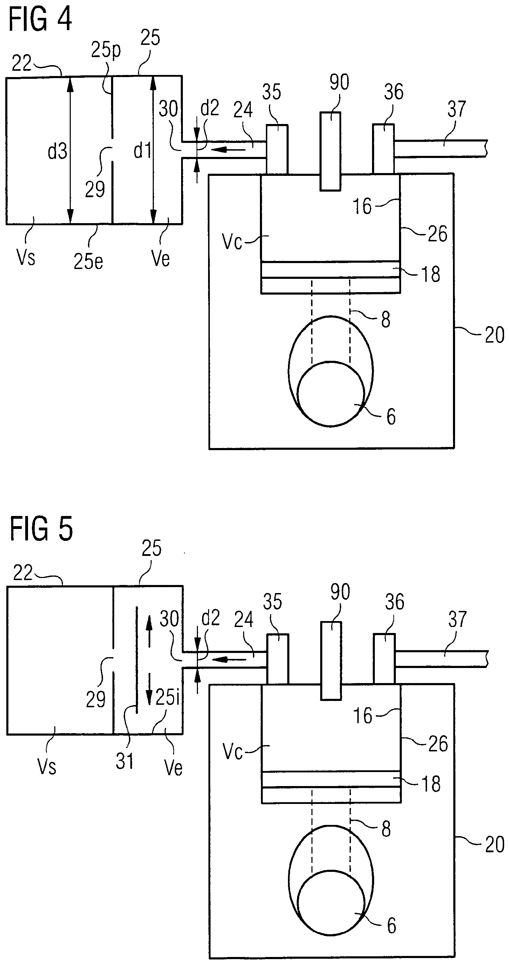

Referring now to Fig. 4, another exemplary embodiment of the present disclosure is illustrated. Again, like elements are denoted by like reference signs.

In the embodiment shown in Fig. 4, collecting chamber 25 may have a cross-section d2 that is more than 100% of cross-section d2 of intake port 24, for example, more than 400%, more than 900%, more than 1600%, more than 2500%, or more than 10000% of cross-section d2 of intake port 24. In the embodiment shown in Fig. 4, collecting chamber 25 is disposed within the housing of intake manifold 22. In some embodiments, collecting chamber 25 may be formed by a partition wall 25p formed in the housing of intake manifold 22. Partition wall 25p may define inlet 29 of collecting chamber 25.In some exemplary embodiments, collecting chamber 25 may have a cross-section d1 that conforms to an inner diameter d3 of intake manifold 22. In other exemplary embodiments, cross-section d1 may be different from inner diameter d3. Collecting chamber volume Ve may again have a volume that is at least 10% of intake volume Vc of cylinder 26, for example, between 50% and 100% of intake volume Vc of cylinder 26, or substantially more than 100% of intake volume Vc of cylinder 26.Collecting chamber 25 may be shorter than in the embodiments shown in Figs. 2 and 3.

It should be appreciated that, while collecting chamber 25 is shown in Fig. 4 as having an inlet 29 with an opening area that is substantially the same as the opening area of outlet 30, inlet 29 may have any appropriate opening area that allows for providing a sufficient amount of the mixture of fuel and air to combustion chamber 16 of cylinder 26 during an intake stroke, while at the same time providing a separation of the volume Vs of intake manifold 22 and the collecting chamber volume Ve during a compression stroke. Further, it should be appreciated that, while only a single inlet 29 is shown in Figs. 2-4, inlet 29 may comprise a plurality of inlets. The respective inlets may each have the same opening area, or may have different opening areas, and may be distributed, for example, in partition wall 25p.

In some exemplary embodiments, cross-section d1 of collecting chamber 25 may be between 50% and 2500%, or more than 2500% of cross-section d2 of intake port 24 and/or a total opening area, i.e., flow cross-sectional area, of inlet 29. This may result in a suitable extension of collecting chamber 25 downstream of inlet 29 that results in a sufficient separation between intake manifold volume Vs and collecting chamber volume Ve.

Referring now to Fig. 5, another exemplary embodiment of the present disclosure is illustrated. Again, like elements are denoted by like reference numerals.

The embodiment shown in Fig. 5 is a modification of the embodiment shown in Fig. 4, and includes a flow director 31 disposed within collecting chamber volume Ve. Flow director 31 may be a body such as a frame, a rib, or the like. In some embodiments, flow director 31 may be a plate-like member being in contact with the flow of the mixture of gaseous fuel and air on at least two sides and being placed between inlet 29 and outlet 30 of collecting chamber 25. In the embodiment shown in Fig. 5, flow director 31 is a plate-like member disposed substantially perpendicular to a flow direction of the mixture of fuel and air entering and exiting collecting chamber 25. Plate-like member 31 may be supported by an appropriate support structure (not shown). In some exemplary embodiments, plate-like member 31 may extend from an inner wall surface of collecting chamber 25. Flow director 31 may be configured to direct a backflow of a discharge of fuel and air from intake port 24 toward inner surface, for example, an inner peripheral surface, 25i of collecting chamber 25. In this manner, it can be assured that the discharged flow of fuel and air from intake port 24 occupies a larger portion of collecting chamber volume Ve, resulting in the desired effect of preventing any of the discharged flow of fuel and air from entering intake manifold 22.

As shown in Fig. 5, in some exemplary embodiments, flow director 31, for example, the plate-like member shown in Fig. 5, may be disposed closer to inlet 29 than to outlet 30. In other embodiments, flow director 31 may be disposed closer to outlet 30 than to inlet 29, or substantially at the same distance from inlet 29 and outlet 30. It should be appreciated that flow director 31 may also be included in the embodiments described above with respect to the above Figs. 2-4.

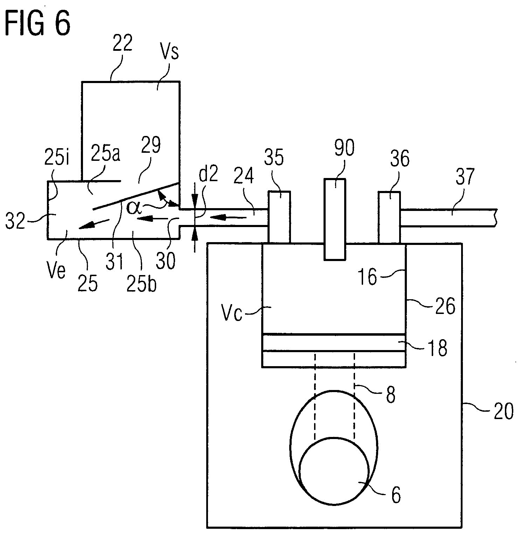

Now referring to Fig. 6, a further embodiment of the present invention is shown. Again, like elements are denoted by like references signs.

In the embodiment shown in Fig. 6, intake manifold 22 and collecting chamber 25 are disposed substantially above one another. Accordingly, the flow direction of the mixture of fuel and air entering collecting chamber 25 through inlet 29 and the flow direction of the mixture of fuel and air exiting collecting chamber 25 through outlet 30 are substantially perpendicular to each other. It should be appreciated, however, that in other embodiments the two flow directions may form an arbitrary angle that is different from 90°.

Further, in a cross-section perpendicular to the flow direction of the mixture of fuel and air in intake manifold 22, inlet 29 and outlet 30 are disposed substantially on one side of collecting chamber 25. It should be appreciated that, while both collecting chamber 25 and intake manifold 22 are shown in Fig. 6 as having a substantially rectangular cross-section, any appropriate cross-section may be used. In the same manner, opening areas of inlet 29 and outlet 30 may have any appropriate size or shape.

Flow director 31 is formed as a partition wall extending from an inner wall of collecting chamber 25. As shown in Fig. 6, the partition wall forming flow director 31 is disposed such that it extends at an angle of less than 90° with respect to the opening area of outlet 30. Accordingly, the partition wall imparts a flow velocity component directed away from inlet 29 on the discharge of the mixture of fuel and air from inlet port 24, as shown by the arrows in Fig. 6. The partition wall forming flow director 31 partitions collecting chamber 25 into an inlet-side chamber 25a and an outlet-side chamber 25b. Further, the partition wall at least partially defines a flow passage 32 fluidly connecting inlet-side chamber 25a and outlet-side chamber 25b. In the embodiment shown in Fig. 6, flow passage 32 is defined by a peripheral edge of the partition wall and inner wall surface 25i of collecting chamber 25. In other exemplary embodiments, flow passage 32 may be formed at appropriate positions in the partition wall, and the partition wall may extend between opposite inner walls of collecting chamber 25.

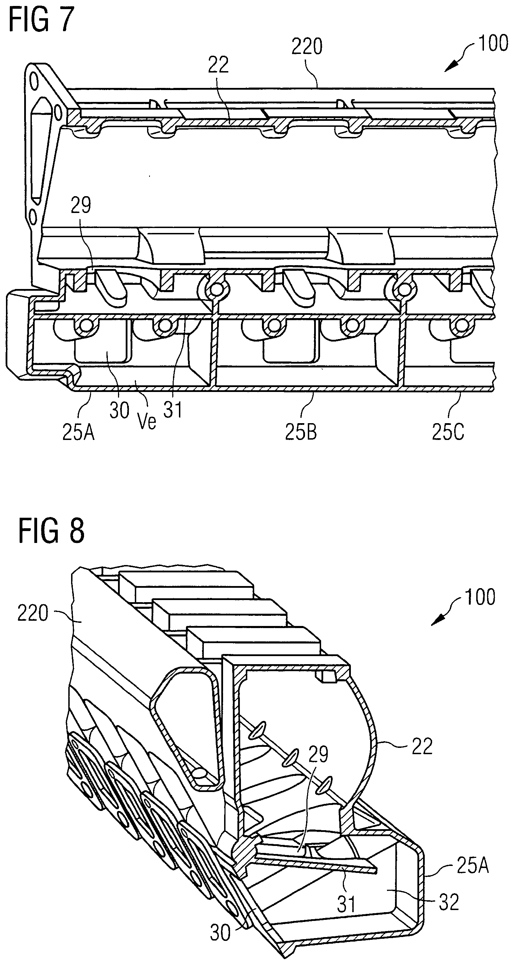

Now referring to Figs. 7 and 8, an exemplary embodiment of a common intake housing 220 for intake manifold 22 and the plurality of collecting chambers 25A, 25B, 25C, etc. is shown. The configuration of the embodiment shown in Figs. 7 and 8 is similar to that of the embodiment shown in Fig. 6.

Fig. 7 shows a partial perspective sectional view of common intake housing 220. As shown in Fig. 7, intake manifold 22 is formed in an upper part of common intake housing 220 and extends along the flow direction of the mixture of fuel and air entering intake manifold 22 on one side. Each collecting chamber 25A, 25B, 25C is formed in a lower part of common intake housing 220 and is separated from neighboring collecting chambers by one or more partition walls. Each collecting chamber is in fluid connection with intake manifold 22 via a substantially circular opening forming inlet 29 of each collecting chamber and includes a substantially rectangular outlet 30 for connection with an intake port of one of cylinders 26A-26C (see Fig. 1) In other exemplary embodiments, inlet 29 and outlet 30 may have openings that have a different shape or size, or may each have a plurality of openings.

Fig. 8 shows another partial perspective sectional view of common intake housing 220. As shown in Fig. 8, each collecting chamber 25A-25D has a substantially box-shaped cross-section in a direction perpendicular to the flow direction of the mixture of fuel and air inside intake manifold 22. Inlet 29 is formed in an upper wall of box-shaped collecting chamber 25, and outlet 30 is formed in an adjacent side wall of box-shaped collecting chamber 25. As shown in Figs. 7 and 8, flow director 31 is formed as a partition wall extending from a portion of common intake housing 220 adjacent to inlet 29 and extends toward a side wall of collecting chamber 25 that is opposite to the side wall in which outlet 30 is formed. Flow passage 32 is formed adjacent to the opposite side wall of collecting chamber 25. As described above in connection with the embodiment shown in Fig. 6, flow director 31 is arranged such that a backflow of discharged fuel and air from intake port 24 impinges on flow director 31 and is directed toward flow passage 32. Flow director 31 imparts a flow velocity component directed away from inlet 29 on the discharged fuel and air. Accordingly, flow director 31 substantially prevents the discharged fuel and air from entering intake manifold 22 via inlet 29.

It should be noted that the embodiments described with reference to Figs. 1 to 8 are merely exemplary, and that many modifications may be made without departing from the present disclosure, as long as at least one plurality of collecting chamber is provided, and the volume Ve of the collecting chamber is sufficiently large to accommodate the amount of fuel and air discharged from inlet port 24 during operation of internal combustion engine 10. Therefore, while it has been described above that the volume of the collecting chamber is at least 10% of an intake volume of each cylinder, for example, between 10% and 500%, between 20% and 500%, between 30% and 500%, between 40% and 500%, between 50% and 500%, between 100% and 500%, or between 200% and 500% of an intake volume of each cylinder, in some applications, other volumes may be used to achieve the desired effect. Further, while the embodiments described herein include a plurality of collecting chambers corresponding to the plurality of cylinders, in other embodiments of the present disclosure only one or more collecting chambers may be provided for a selected number of cylinders. Still further, in case a plurality of collecting chambers is provided, it should be appreciated that the plurality of collecting chambers may have different sizes and do not necessarily have to have the same collecting chamber volume. For example, the collecting chamber volume may decrease for the cylinders which are disposed further downstream in the flow direction of the intake air or the mixture of intake air and fuel inside the manifold.

### Industrial Applicability

In the following, operation of an exemplary disclosed gaseous fuel internal combustion engine 10 is described with reference to Figs. 1 to 8.

During operation of gaseous fuel internal combustion engine 10, gas mixer 60 mixes air received from main air inlet 4 with gaseous fuel and provides the resulting mixture to compressor 44. Subsequently, the mixture is compressed by compressor 44 and supplied to intake manifold 22 via cooler 23. The mixture of fuel and air supplied to intake manifold 22 flows along intake manifold 22 in a flow direction defined by intake manifold 22 (shown by the arrow in Fig. 1).

During an intake stroke, each of cylinders 26A-26D draws an intake volume Vc of the mixture of fuel and air from intake manifold 22 into the corresponding combustion chamber 16 (see Figs. 2-6) while the corresponding intake valve 35 is opened. Then, the mixture of fuel and air in combustion chamber 16 is compressed during a subsequent compression stroke of each of cylinders 26A-26D.

When the gaseous fuel internal combustion engine 10 is operated with an Atkinson timing for intake valve 35, inlet valve 35 remains opened during part of a compression stroke, and some of the mixture of fuel and air in combustion chamber 16 is discharged from the same and enters the corresponding intake port 24. The discharged mixture of fuel and air flows along intake port 24, as shown by the arrows in Figs. 2-6, and enters collecting chamber 25 disposed upstream of intake port 24. It should be noted that the terms "upstream" and "downstream" as used herein refer to the flow direction of the mixture of fuel and air supplied from intake manifold 22 to combustion chamber 16 of each of cylinders 26A-26D.

Each of collecting chambers 25A-25D is separated from neighboring collecting chambers and has a volume Ve that is at least 10% of the intake volume Vc of each cylinder 26A-26D. Therefore, the flow of fuel and air entering collecting chambers 25A-25D is prevented from entering intake manifold 22, or is at least limited, due to the sufficiently large volume Ve of each of collecting chambers 25A-25D.

Accordingly, with the intake assembly 100 of the present disclosure, it can be assured that the temperature of the mixture of fuel and air inside intake manifold 22 is not increased at the position of the cylinders disposed further along the flow direction. Therefore, an overall efficiency of gaseous fuel internal combustion engine 10 may be increased.

In some exemplary embodiments, collecting chambers 25A-25D may have a size and a configuration allowing for some of the discharged fuel and air to enter intake manifold 22, as long as the negative impact on the overall performance of the internal combustion engine is acceptable. Depending on the situation, the collecting chamber volume Ve may, for example, be less than 50% of the intake volume Vc of each cylinder 26A-26D, and the desired effects may be achieved by utilizing an appropriate geometry of the collecting chambers and the included flow directors.

Further, the shape of the collecting chambers and the intake manifold described herein are not intended to be limited to the specific shapes described with respect to the exemplary embodiments. In addition, depending on the configuration of the internal combustion engine 10, modifications to the respective sizes, shapes, number of openings and positions of the inlet 29 and the outlet 30 of each collecting chamber 25 may be made as appropriate.

Although the preferred embodiments of the present disclosure have been described herein, improvements and modifications may be incorporated without departing from the scope of the following claims.

## Claims

1. An intake assembly (100) for an internal combustion engine (10) having a plurality of cylinders (26, 26A, 26B, 26C, 26D), the intake assembly (100) comprising:
an intake manifold (22) configured to supply a gaseous fluid to the plurality of cylinders (26, 26A, 26B, 26C, 26D);
a collecting chamber (25, 25A, 25B, 25C, 25D) fluidly connected to the intake manifold (22) and adapted to be fluidly connected to an intake port (24, 24A, 24B, 24C, 24D) of one of the plurality of cylinders (26, 26A, 26B, 26C, 26D); **characterised by**
a plate-like flow director (31) disposed in the collecting chamber (25, 25A, 25B, 25C, 25D) and extending from an inner wall surface of the collecting chamber (25, 25A, 25B, 25C, 25D) for directing the backflow of the gaseous fluid from the intake port (24, 24A, 24B, 24C, 24D) toward an inner peripheral surface (25i) of the collecting chamber (25, 25A, 25B, 25C, 25D) to limit a backflow of the gaseous fluid from the intake port (24, 24A, 24B, 24C, 24D) into the intake manifold (22).

2. The intake assembly of claim 1, wherein the collecting chamber (25, 25A, 25B, 25C, 25D) is fluidly connected to the intake manifold (22) via an inlet (29) and adapted to be fluidly connected to the intake port (24, 24A, 24B, 24C, 24D) via an outlet (30), and the plate-like flow director (31) substantially faces at least one of the inlet (29) or the outlet (30).

3. The intake assembly of claim 2, wherein the plate-like flow director (31) is arranged closer to the inlet (29) than to the outlet (30).

4. The intake assembly of claim 2 or 3, wherein, in a cross-section perpendicular to a flow direction of the gaseous fluid in the intake manifold (22), the inlet (29) and the outlet (30) are disposed substantially on one side of the collecting chamber (25, 25A, 25B, 25C, 25D), and the plate-like flow director (31) is configured to direct the backflow of the gaseous fluid toward the other side of the collecting chamber (25, 25A, 25B, 25C, 25D).

5. The intake assembly of any one of claims 2 to 4, wherein the plate-like flow director (31) extends from an inner wall of the collecting chamber (25, 25A, 25B, 25C, 25D) at an angle (α) of less than 90 degrees with respect to an opening area of the outlet (30) to impart a flow velocity component directed away from the inlet (29) on the backflow of the gaseous fluid.

6. The intake assembly of any one of claims 1 to 5, wherein the plate-like flow director (31) forms a partition wall for partitioning the collecting chamber (25, 25A, 25B, 25C, 25D) into an inlet-side chamber (25a) fluidly connected to the intake manifold (22) and an outlet-side chamber (25b) adapted to be fluidly connected to the intake port (24, 24A, 24B, 24C, 24D), the partition wall at least partially defining a flow passage (32) fluidly connecting the inlet-side chamber (25a) and the outlet-side chamber (25b).

7. The intake assembly of claim 6, wherein the flow passage (32) is defined by a peripheral edge of the partition wall and the inner peripheral surface (25i) of the collecting chamber (25, 25A, 25B, 25C, 25D).

8. The intake assembly of any one of claims 1 to 7, wherein the collecting chamber (25, 25A, 25B, 25C, 25D) defines a collecting chamber volume (Ve) that is at least 10% of an intake volume (Vc) of one of the plurality of cylinders (26, 26A, 26B, 26C, 26D), for example, between 10% and 500%, between 20% and 500%, between 30% and 500%, between 40% and 500%, between 50% and 500%, between 100% and 500%, or between 200% and 500% of the intake volume (Vc).

9. The intake assembly of any one of claims 1 to 8, wherein the collecting chamber (25, 25A, 25B, 25C, 25D) has a maximum flow cross-sectional area (d1) that is between 50% and 2500%, between 80% and 2500%, between 100% and 2500%, between 150% and 2500%, or more than 100%, for example, more than 400%, more than 900%, more than 1600%, more than 2500% or more than 10000% of a cross-section (d2) of the intake port (24, 24A, 24B, 24C, 24D).

10. The intake assembly of claim 9, wherein the collecting chamber (25, 25A, 25B, 25C, 25D) includes one or more inlet openings, and the maximum flow cross-sectional area (d1) of the collecting chamber (25, 25A, 25B, 25C, 25D) is between 50% and 2500%, between 80% and 2500%, between 100% and 2500%, or more than 2500% of a total flow cross-sectional area of the one or more inlet openings.

11. The intake assembly of any one of claims 1 to 10, wherein the intake manifold (22) and the collecting chamber (25, 25A, 25B, 25C, 25D) are integrally formed in a common intake housing (220).

12. The intake assembly of any one of claims 1 to 11, wherein the intake assembly (100) comprises a plurality of collecting chambers (25, 25A, 25B, 25C, 25D), each of the plurality of collecting chambers (25, 25A, 25B, 25C, 25D) being associated with one of the plurality of cylinders (26, 26A, 26B, 26C, 26D).

13. The intake assembly of claim 12, wherein the plurality of collecting chambers (25, 25A, 25B, 25C, 25D) are configured to be identical to each other.

14. The intake assembly of claim 12, wherein at least one of the plurality of collecting chambers (25, 25A, 25B, 25C, 25D) is configured to be different from at least one other of the plurality of collecting chambers (25, 25A, 25B, 25C, 25D), the size of the at least one of the plurality of collecting chambers (25, 25A, 25B, 25C, 25D) being different from the size of the at least one other of the plurality of collecting chambers (25, 25A, 25B, 25C, 25D) and/or the sizes of the plurality of collecting chambers (25, 25A, 25B, 25C, 25D) decreasing in the flow direction of the gaseous fluid in the intake manifold (22).

15. An internal combustion engine (10) comprising:
the intake assembly (100) of any one of claims 1 to 14; and
a plurality of cylinders (26, 26A, 26B, 26C, 26D), each of the plurality of cylinders having an intake port (24, 24A, 24B, 24C, 24D) for receiving a gaseous fluid from the intake assembly (100).

## Patentansprüche

1. Ansauganordnung (100) für eine Brennkraftmaschine mit innerer Verbrennung (10), die mehrere Zylinder (26, 26A, 26B, 26C, 26D) aufweist, mit:
einem Ansaugrohr (22), das zum Zuführen eines gasförmigen Fluids zu den mehreren Zylindern (26, 26A, 26B, 26C, 26D) ausgebildet ist;
einer Sammelkammer (25, 25A, 25B, 25C, 25D), die mit dem Ansaugrohr (22) fluidverbunden ist und zur Fluidverbindung mit einem Einlasskanal (24, 24A, 24B, 24C, 24D) eines der mehreren Zylinder (26, 26A, 26B, 26C, 26D) angepasst ist; **gekennzeichnet durch**
einen plattenartigen Strömungsleiter (31), der in der Sammelkammer (25, 25A, 25B, 25C, 25D) angeordnet ist und sich zum Leiten des Rückstroms des gasförmigen Fluids von dem Einlasskanal (24, 24A, 24B, 24C, 24D) zu einer Innenumfangsfläche (25i) der Sammelkammer (25, 25A, 25B, 25C, 25D) von einer Innenwandfläche der Sammelkammer (25, 25A, 25B, 25C, 25D) erstreckt, so dass ein Rückstrom des gasförmigen Fluids von dem Einlasskanal (24, 24A, 24B, 24C, 24D) in das Ansaugrohr (22) begrenzt wird.

2. Ansauganordnung nach Anspruch 1, bei der die Sammelkammer (25, 25A, 25B, 25C, 25D) über einen Einlass (29) mit dem Ansaugrohr (22) fluidverbunden ist und zur Fluidverbindung mit dem Einlasskanal (24, 24A, 24B, 24C, 24D) über einen Auslass (30) angepasst ist, und der plattenartige Strömungsleiter (31) mindestens dem Einlass (29) oder dem Auslass (30) im Wesentlichen zugewandt ist.

3. Ansauganordnung nach Anspruch 2, bei der der plattenartige Strömungsleiter (31) näher an dem Einlass (29) als an dem Auslass (30) angeordnet ist.

4. Ansauganordnung nach Anspruch 2 oder 3, bei der in einem Querschnitt senkrecht zu einer Strömungsrichtung des gasförmigen Fluids in dem Ansaugrohr (22) der Einlass (20) und der Auslass (30) im Wesentlichen auf einer Seite der Sammelkammer (25, 25A, 25B, 25C, 25D) angeordnet sind, und der plattenartige Strömungsleiter (31) zum Leiten des Rückstroms des gasförmigen Fluids zu der anderen Seite der Sammelkammer (25, 25A, 25B, 25C, 25D) ausgebildet ist.

5. Ansauganordnung nach einem der Ansprüche 2 bis 4, bei der sich der plattenartige Strömungsleiter (31) von einer Innenwand der Sammelkammer (25, 25A, 25B, 25C, 25D) unter einem Winkel (α) von weniger als 90 Grad in Bezug auf einen Öffnungsquerschnitt des Auslasses (30) erstreckt, so dass eine von dem Einlass (29) weg gerichtete Strömungsgeschwindigkeitskomponente auf den Rückstrom des gasförmigen Fluids aufgebracht wird.

6. Ansauganordnung nach einem der Ansprüche 1 bis 5, bei der der plattenartige Strömungsleiter (31) eine Trennwand zum Unterteilen der Sammelkammer (25, 25A, 25B, 25C, 25D) in eine einlassseitige Kammer (25a), die mit dem Ansaugrohr (22) fluidverbunden ist, und eine auslassseitige Kammer (25b), die zur Fluidverbindung mit dem Ansaugkanal (24, 24A, 24B, 24C, 24D) angepasst ist, bildet, wobei die Trennwand zumindest teilweise einen Strömungskanal (32) festlegt, der die einlassseitige Kammer (25a) und die auslassseitige Kammer (25b) fluidverbindet.

7. Ansauganordnung nach Anspruch 6, bei der der Strömungskanal (32) durch einen äußeren Rand der Trennwand und die Innenumfangsfläche (25i) der Sammelkammer (25, 25A, 25B, 25C, 25D) festgelegt ist.

8. Ansauganordnung nach einem der Ansprüche 1 bis 7, bei der die Sammelkammer (25, 25A, 25B, 25C, 25D) ein Sammelkammervolumen (Ve) festlegt, das mindestens 10% eines Ansaugvolumens (Vc) eines der mehreren Zylinder (26, 26A, 26B, 26C, 26D) beträgt, beispielsweise zwischen 10% und 500%, zwischen 20% und 500%, zwischen 30% und 500%, zwischen 40% und 500%, zwischen 50% und 500%, zwischen 100% und 500% oder zwischen 200% und 500% des Ansaugvolumens (Vc).

9. Ansauganordnung nach einem der Ansprüche 1 bis 8, bei der die Sammelkammer (25, 25A, 25B, 25C, 25D) einen maximalen Strömungsquerschnitt (d1) aufweist, der zwischen 50% und 2500%, zwischen 80% und 2500%, zwischen 100% und 2500%, zwischen 150% und 2500% oder mehr als 100%, beispielsweise mehr als 400%, mehr als 900%, mehr als 1600%, mehr als 2500% oder mehr als 10000%, eines Querschnitts (d2) des Ansaugkanals (24, 24A, 24B, 24C, 24D) beträgt.

10. Ansauganordnung nach Anspruch 9, bei der die Sammelkammer (25, 25A, 25B, 25C, 25D) eine oder mehrere Einlassöffnungen aufweist, und der maximale Strömungsquerschnitt (d1) der Sammelkammer (25, 25A, 25B, 25C, 25D) zwischen 50% und 2500%, zwischen 80% und 2500%, zwischen 100% und 2500% oder mehr als 2500% eines Gesamtströmungsquerschnitts der einen oder mehreren Einlassöffnungen beträgt.

11. Ansauganordnung nach einem der Ansprüche 1 bis 10, bei der das Ansaugrohr (22) und die Sammelkammer (25, 25A, 25B, 25C, 25D) integral in einem gemeinsamen Ansauggehäuse (220) ausgebildet sind.

12. Ansauganordnung nach einem der Ansprüche 1 bis 11, bei der die Ansauganordnung (100) mehrere Sammelkammern (25, 25A, 25B, 25C, 25D) aufweist, wobei jede der mehreren Sammelkammern (25, 25A, 25B, 25C, 25D) einem der mehreren Zylinder (26, 26A, 26B, 26C, 26D) zugeordnet ist.

13. Ansauganordnung nach Anspruch 12, bei der die mehreren Sammelkammern (25, 25A, 25B, 25C, 25D) so ausgebildet sind, dass sie identisch zueinander sind.

14. Ansauganordnung nach Anspruch 12, bei der mindestens eine der mehreren Sammelkammern (25, 25A, 25B, 25C, 25D) so ausgebildet ist, dass sie sich von mindestens einer anderen der mehreren Sammelkammern (25, 25A, 25B, 25C, 25D) unterscheidet, wobei die Größe der mindestens einen der mehreren Sammelkammern (25, 25A, 25B, 25C, 25D) unterschiedlich zu der Größe der mindestens einen anderen der mehreren Sammelkammern (25, 25A, 25B, 25C, 25D) ist, und/oder die Größen der mehreren Sammelkammern (25, 25A, 25B, 25C, 25D) in der Strömungsrichtung des gasförmigen Fluids in dem Ansaugrohr (22) abnehmen.

15. Brennkraftmaschine mit inneren Verbrennung (10) mit:
einer Ansauganordnung (100) nach einem der Ansprüche 1 bis 14; und
mehreren Zylindern (26, 26A, 26B, 26C, 26D), wobei jeder der mehreren Zylinder einen Ansaugkanal (24, 24A, 24B, 24C, 24D) zum Empfangen eines gasförmigen Fluids von der Ansauganordnung (100) aufweist.

## Revendications

1. Ensemble d'admission (100) pour un moteur à combustion interne (10) présentant une pluralité de cylindres (26, 26A, 26B, 26C, 26D), l'ensemble d'admission (100) comprenant :
un collecteur d'admission (22) configuré pour fournir un fluide gazeux à la pluralité de cylindres (26, 26A, 26B, 26C, 26D) ;
une chambre de collecte (25, 25A, 25B, 25C, 25D) reliée de manière fluidique au collecteur d'admission (22) et apte à être reliée de manière fluidique à un orifice d'admission (24, 24A, 24B, 24C, 24D) de l'un de la pluralité de cylindres (26, 26A, 26B, 26C, 26D) ; **caractérisé par**
un organe de direction d'écoulement en forme de plaque (31) disposé dans la chambre de collecte (25, 25A, 25B, 25C, 25D) et s'étendant depuis une surface de paroi intérieure de la chambre de collecte (25, 25A, 25B, 25C, 25D) pour diriger le flux de retour du fluide gazeux depuis l'orifice d'admission (24, 24A, 24B, 24C, 24D) vers une surface périphérique intérieure (25i) de la chambre de collecte (25, 25A, 25B, 25C, 25D) pour limiter un flux de retour du fluide gazeux depuis l'orifice d'admission (24, 24A, 24B, 24C, 24D) dans le collecteur d'admission (22).

2. Ensemble d'admission selon la revendication 1, dans lequel la chambre de collecte (25, 25A, 25B, 25C, 25D) est reliée de manière fluidique au collecteur d'admission (22) par l'intermédiaire d'une entrée (29) et est apte à être reliée de manière fluidique à l'orifice d'admission (24, 24A, 24B, 24C, 24D) par l'intermédiaire d'une sortie (30), et l'organe de direction d'écoulement en forme de plaque (31) fait sensiblement face à au moins l'une parmi l'entrée (29) ou la sortie (30).

3. Ensemble d'admission selon la revendication 2, dans lequel l'organe de direction d'écoulement en forme de plaque (31) est agencé plus près de l'entrée (29) que de la sortie (30).

4. Ensemble d'admission selon la revendication 2 ou 3, dans lequel, dans une coupe transversale perpendiculaire à un sens d'écoulement du fluide gazeux dans le collecteur d'admission (22), l'entrée (29) et la sortie (30) sont disposées sensiblement sur un côté de la chambre de collecte (25, 25A, 25B, 25C, 25D), et l'organe de direction d'écoulement en forme de plaque (31) est configuré pour diriger le flux de retour du fluide gazeux vers l'autre côté de la chambre de collecte (25, 25A, 25B, 25C, 25D).

5. Ensemble d'admission selon l'une quelconque des revendications 2 à 4, dans lequel l'organe de direction d'écoulement en forme de plaque (31) s'étend d'une paroi intérieure de la chambre de collecte (25, 25A, 25B, 25C, 25D) à un angle (α) inférieur à 90 degrés par rapport à une aire d'ouverture de la sortie (30) pour appliquer une composante de vitesse de flux dirigée à l'écart de l'entrée (29) sur le flux de retour du fluide gazeux.

6. Ensemble d'admission selon l'une quelconque des revendications 1 à 5, dans lequel l'organe de direction d'écoulement en forme de plaque (31) forme une cloison pour partitionner la chambre de collecte (25, 25A, 25B, 25C, 25D) en une chambre de côté d'entrée (25a) reliée de manière fluidique au collecteur d'admission (22) et une chambre de côté de sortie (25b) apte à être reliée de manière fluidique à l'orifice d'admission (24, 24A, 24B, 24C, 24D), la cloison définissant au moins partiellement un passage d'écoulement (32) reliant de manière fluidique la chambre de côté d'entrée (25a) et la chambre de côté de sortie (25b).

7. Ensemble d'admission selon la revendication 6, dans lequel le passage d'écoulement (32) est défini par un bord périphérique de la cloison et la surface périphérique intérieure (25i) de la chambre de collecte (25, 25A, 25B, 25C, 25D).

8. Ensemble d'admission selon l'une quelconque des revendications 1 à 7, dans lequel la chambre de collecte (25, 25A, 25B, 25C, 25D) définit un volume de chambre de collecte (Ve) qui est au moins 10 % d'un volume d'admission (Vc) de l'un de la pluralité de cylindres (26, 26A, 26B, 26C, 26D), par exemple entre 10 % et 500 %, entre 20 % et 500 %, entre 30 % et 500 %, entre 40 % et 500 %, entre 50 % et 500 %, entre 100 % et 500 % ou entre 200 % et 500 % du volume d'admission (Vc).

9. Ensemble d'admission selon l'une quelconque des revendications 1 à 8, dans lequel la chambre de collecte (25, 25A, 25B, 25C, 25D) présente une aire maximale de coupe transversale de flux (d1) qui est entre 50 % et 2500 %, entre 80 % et 2500 %, entre 100 % et 2500 %, entre 150 % et 2500 %, ou plus de 100 %, par exemple plus de 400 %, plus de 900 %, plus de 1600 %, plus de 2500 % ou plus de 10 000 % d'une coupe transversale (d2) de l'orifice d'admission (24, 24A, 24B, 24C, 24D).

10. Ensemble d'admission selon la revendication 9, dans lequel la chambre de collecte (25, 25A, 25B, 25C, 25D) comporte une ou plusieurs ouvertures d'entrée, et l'aire maximale de coupe transversale de flux (d1) de la chambre de collecte (25, 25A, 25B, 25C, 25D) est entre 50 % et 2500 %, entre 80 % et 2500 %, entre 100 % et 2500 %, ou plus de 2500 % d'une aire totale de coupe transversale de flux de l'une ou plusieurs ouvertures d'entrée.

11. Ensemble d'admission selon l'une quelconque des revendications 1 à 10, dans lequel le collecteur d'admission (22) et la chambre de collecte (25, 25A, 25B, 25C, 25D) sont formés solidairement dans un logement d'admission commun (220).

12. Ensemble d'admission selon l'une quelconque des revendications 1 à 11, dans lequel l'ensemble d'admission (100) comprend une pluralité de chambres de collecte (25, 25A, 25B, 25C, 25D), chacune de la pluralité de chambres de collecte (25, 25A, 25B, 25C, 25D) étant associée à l'un de la pluralité de cylindres (26, 26A, 26B, 26C, 26D).

13. Ensemble d'admission selon la revendication 12, dans lequel la pluralité de chambres de collecte (25, 25A, 25B, 25C, 25D) sont configurées pour être identiques l'une à l'autre.

14. Ensemble d'admission selon la revendication 12, dans lequel au moins l'une de la pluralité de chambres de collecte (25, 25A, 25B, 25C, 25D) est configurée pour être différente d'au moins une autre de la pluralité de chambres de collecte (25, 25A, 25B, 25C, 25D), la taille de l'au moins une de la pluralité de chambres de collecte (25, 25A, 25B, 25C, 25D) étant différente de la taille de l'au moins une autre de la pluralité de chambres de collecte (25, 25A, 25B, 25C, 25D) et/ou les tailles de la pluralité de chambres de collecte (25, 25A, 25B, 25C, 25D) diminuant dans le sens d'écoulement du fluide gazeux dans le collecteur d'admission (22).

15. Moteur à combustion interne (10) comprenant :
l'ensemble d'admission (100) selon l'une quelconque des revendications 1 à 14 ; et
une pluralité de cylindres (26, 26A, 26B, 26C, 26D), chacun de la pluralité de cylindres présentant un orifice d'admission (24, 24A, 24B, 24C, 24D) pour recevoir un fluide gazeux en provenance de l'ensemble d'admission (100).
